## Europäisches Patentamt

## European Patent Office

## Office européen des brevets

(11) Publication number: **0 027 995**
**B1**

(12) **EUROPEAN PATENT SPECIFICATION**

(45) Date of publication of patent specification: **10.04.85**

(21) Application number: **80106414.8**

(22) Date of filing: **21.10.80**

(51) Int. Cl.⁴: **F 24 D 11/02, F 24 D 17/00**

(54) **System for transferring heat energy from a refrigeration circuit to a hot water circuit.**

(30) Priority: **25.10.79 US 88322**
**25.10.79 US 88319**

(43) Date of publication of application:
**06.05.81 Bulletin 81/18**

(45) Publication of the grant of the patent:
**10.04.85 Bulletin 85/15**

(84) Designated Contracting States:
**DE FR GB IT**

(56) References cited:
**FR-A-2 400 177**
**US-A-4 141 222**
**US-A-4 142 379**

**ASHRAE JOURNAL, vol. 7, no. 4, April 1965, NEW YORK (US) C.T. HEALY et al.: "Water heating by recovery of rejected heat from heat pumps", pages 68-75**

(73) Proprietor: **CARRIER CORPORATION**
**Carrier Tower 6304 Carrier Parkway P.O. Box 4800**
**Syracuse New York 13221 (US)**

(72) Inventor: **Spath, Herbert James**
**RD 3**
**Clay,New York (US)**
Inventor: **Raymond, Glendon A.**
**RFD 3**
**Fulton, New York (US)**
Inventor: **Honnold, Fred V.**
**5686 Pierson Road**
**Fayetteville, New York (US)**

(74) Representative: **Baillie, Iain Cameron et al**
**c/o Ladas & Parry Isartorplatz 5**
**D-8000 München 2 (DE)**

## Description

The present invention relates to a device for transferring heat energy from a refrigeration circuit to a hot water system. More particularly, the present invention concerns a combination refrigerant desuperheater hot water heater, and apparatus and a method of supplying heated water to a hot water tank.

In the typical vapor compression refrigeration system various components such as a compressor, condenser, evaporator and expansion device are arranged to transfer heat energy between the fluid in heat exchange relation with the evaporator and fluid in heat exchange relation with the condenser. It is also known in conjunction with such refrigeration systems to utilize a desuperheater for removing superheat energy from gaseous refrigerant prior to circulating said refrigerant to the condenser.

In a conventional building installation a hot water heater is provided to supply heated water to an enclosure. Many hot water heaters have a cold water inlet connected to an inlet extension pipe and a hot water outlet extending through the top of the hot water tank. Often an inlet extension pipe is connected to the cold water inlet such that the incoming water is directed to the bottom portion of the tank. In hot water tanks water is heated at the bottom of the tank and rises such that a stratified tank with relatively warm water at the top and cool water at the bottom is provided. When demand is made for hot water, water is discharged from the top of the tank at its warmest temperature and cold water is supplied through the inlet to the bottom portion of the tank.

It is known to combine a refrigeration system and hot water heating system such that the superheat of the refrigerant may be rejected to water to be heated such that this heat energy may be utilized to provide hot water.

In air conditioning systems when cooling is required heat energy is transferred from the enclosure and discharged to the ambient or some other heat sink. This heat is often wasted. With the combination system as disclosed herein it can be seen that this heat energy that is unwanted in the enclosure may be utilized to supply heat energy to water to provide heated water for various end uses. This heated water may be used for bathing, cleaning, cooking and other uses in a residence. Commercial applications include restaurants, supermarkets, process utilization and any other application wherein waste energy or excess energy from a refrigeration system may be utilized to provide some or all of the hot water heating needs.

In addition to refrigeration systems providing excess heat for heating water during the cooling season, certain refrigeration circuits are capable of reversing the cycle of operation for providing heat energy to the enclosure during the heating season. If it is desirable some of the heat provided during the heating season may also be utilized to supply hot water through the disclosed hot water refrigerant desuperheater.

U.S. Patent 4,141,222 discloses a water heating device wherein hot water is circulated in either heat exchange relation with a heat exchanger or through a by-pass line. A first thermal switch acts as a diverter switch which, depending upon the temperature of the water, allows the water to flow through the heat exchanger or, if sufficiently heated, by-passes the heat exchanger through the by-pass line. A second thermal switch acts a hold-back device which prevents water from flowing back to the heat exchanger until the water is sufficiently heated. Hence, should the pump be operating and the water be flowing either through the by-pass line or through the heat exchanger and the water be of insufficient temperature, then the second thermal device will prevent water flow from returning to the heat exchanger. Under these operating conditions the first thermal switch does not see any fresh water being circulated from the tank since the second thermal switch prevents water flow. Hence, it is difficult to regulate the temperature in the tank. The present invention utilizes a combination of a by-pass line and appropriate thermal sensors to solve this problem.

According to the present invention, there is provided a system for transferring heat energy from a refrigeration circuit to a hot water circuit, said system including a refrigeration circuit, a hot water circuit and a heat exchange associated with both said circuits, wherein the refrigeration circuit includes a compressor (10), a condenser (14), a conduit (11) interconnecting the compressor and condenser and passing through the heat exchanger, an expansion device (16), and an evaporator (18) and wherein the hot water circuit includes a reservoir tank (22), a conduit (64, 15, 70) for passing water through the system to said tank, a portion (15) of said conduit passing through the heat exchanger and a further portion (80) of said conduit by-passing said heat-exchanger, a sensor (32) located in the water conduit upstream of the heat exchanger and a control valve (36) is located in the hot water conduit downstream of the heat exchanger, and a pump (30) located between the reservoir tank (22) and both the conduit passing through the heat exchanger (15) and the further portion (80), characterized in that the inlet of the by-pass conduit (80) is located downstream of the sensor (32) and upstream of the heat exchanger and the outlet of the by-pass conduit (80) is located downstream of the valve (36) and the sensor (32) is coupled to the valve (36) to permit said valve (36) to open when a temperature below a predetermined value is sensed, whereby when said valve (36) is open, primary flow of water is through the heat exchanger while secondary flow is through the by-pass conduit (80) and when said valve is closed a substantially reduced volume of water flows per unit of time through the by-pass conduit (80) only thereby by passing the heat exchanger.

Such a system utilizes a pump to circulate the water. Whenever the pump is running water is circulated from the tank in heat exchange relation with the sensor then back to the tank. A second sensor may advantageously be employed to detect a temperature level such that the valve is closed, water continues to flow from the pump through the by-pass conduit and back to the tank. Hence, the sensor may continually monitor the water temperature of the water being circulated from the tank regardless of whether or not the water being heated has reached an appropriate temperature.

The obvious advantages of such a system are that the water temperature from the tank is continuously monitored and that the pump operates continually such that water is always circulated effecting cooling of the pump. The pump is never operated to pump water into a completely closed circuit which allows no water circulation.

In the specific embodiment disclosed a pump is used to circulate water from the hot water tank through the heat exchanger and back to the hot water tank when the compressor of the refrigeration circuit is energized. A temperature sensing device is located to sense the temperature of the incoming water. A second temperature sensing device is located to sense the temperature of the water being discharged from the heat exchanger. When both of these devices sense the proper condition a solenoid valve is opened such that the pump circulates water through the heat exchanger and back to the hot water tank. Should either of these switches be closed the pump will continue to operate, however, water will then flow through a by-pass line located in parallel with the heat exchanger. This by-pass line has as a part thereof a flow restriction which substantially reduces the volume flow of water through the by-pass line as compared to the flow through the heat exchanger when the valve is in the open position. The combination of the pump operating continuously with the compressor and this flow restricted by-pass line acts to provide for continual sensing of the water temperature in the tank and additionally serves to reduce the overall energy input to the pump and the wear on the pump caused by continual cycling. In addition thereto by allowing for the limited flow through the by-pass line the heat energy generated by the pump, albeit a small value, may be supplied to a relatively small flow of water.

Additionally, a useful feature of the invention comprises a coaxial fitting for supplying heated water from the heat exchanger to the hot water tank. It has been found that the temperature of the water flowing from the heat exchanger may exceed the normal discharge temperature of water flowing from the hot water tank to the hot water supply system. To prevent any unexpected high temperature water from traveling through the hot water system a coaxial fitting is utilized. This fitting discharges the water from the heat exchanger a predetermined depth into the top of the tank such that the water from the heat exchanger mixes partially with the water in the tank before it may be discharged out the hot water outlet of the tank into the hot water system.

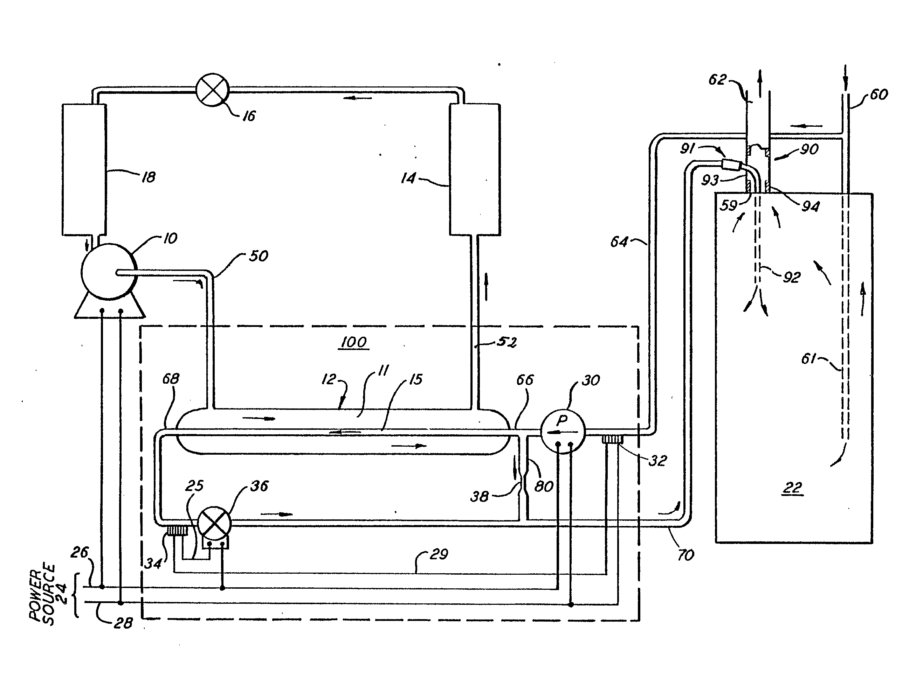

This invention will now be described by way of example with reference to the accompanying drawing in which the figure is a schematic diagram of a vapor compression refrigeration system and a hot water system with the claimed apparatus such that heat energy may be transferred between the two.

The embodiment described herein will be in conjunction with a vapor compression refrigeration system and a residential-type hot water tank. It is to be understood that the invention applies likewise to to various types of refrigeration circuits wherein the refrigerant is superheated and additionally to various size units such as residential, commercial and industrial. Additionally, although the hot water system as described herein is appropriate for a residential application commercial and other size hot water systems would be equally suitable.

Referring now to the figure there can be seen a vapor compression refrigeration system having compressor 10 connected to discharge line 50 to refrigerant conduit 11 of desuperheater 12. The refrigerant conduit 11 of the desuperheater is connected by condenser inlet line 52 to condenser 14. Condenser 14 is connected to expansion means 16 which is connected to evaporator 18 which is connected to the compressor to complete the closed vapor compression circuit.

A water system is disclosed having water inlet 60 supplying water to hot water tank 22. Water inlet 60 extends through the top of the hot water tank and has a water inlet extension 61 extending towards the bottom of the tank such that cooler inlet water may be supplied to the bottom of the hot water tank. Feed line 64 is connected at T-intersection to water inlet 60 such that water may be supplied to preheater-desuperheater package 100 (that part of the diagram within the dashed lines) from either the water inlet or the hot water tank depending upon whether or not water is being discharged from the tank.

Feed line 64 is connected to pump 30 which is connected to desuperheater inlet line 66. Desuperheater inlet line 66 is connected to water conduit 15 of the desuperheater 12 which is connected to the desuperheater outlet line 68. Desuperheater outlet line 68 is connected through solenoid valve 36 to return line 70. In parallel with desuperheater 12 desuperheater outlet line 68 and solenoid valve 36 is by-pass line 80 having flow restriction 38. Flow restriction 38 may be a capillary tube or fixed orifice device which creates a pressure drop. Return line 70 is connected through joint 91 to return line extension 92 of coaxial fitting 90 such that hot water from the desuperheater may be conducted into the reservoir of water within hot water tank 22. Hot water may be discharged from hot water tank 22 through tank outlet 59 through the conduit portion 94 of coaxial fitting 90 into water outlet conduit 62 to supply the hot water system.

Preheater-desuperheater package 100 includes pump 30 connected to power source 24. Additionally, inlet thermal switch 32 and outlet thermal switch 34 are connected in series with solenoid valve 36. Compressor 10 of the refrigeration circuit is also connected to power source 24. Specifically, wire 26 is connected to compressor 10, to pump 30 and to solenoid valve 36. Wire 28 is connected to compressor 10, pump 30 and to thermal switch 32. Wire 29 connects inlet thermal switch 32 to outlet thermal switch 34. Wire 25 connects outlet thermal switch 34 to solenoid valve 36.

When a demand is sensed such that the refrigeration circuit is operated for supplying heating or cooling compressor 10 is energized which additionally serves to energize pump 30 and to provide power to inlet thermal switch 32. Once compressor 10 is energized hot refrigerant gas is discharged to desuperheater 12. This hot gas contains thermal energy including superheat energy, i.e. the energy rejected to cool the gas to its saturation temperature, the heat condensation (heat energy necessary to condense the gas to a liquid). In the desuperheater only the heat energy rejected by the gas being cooled to the saturated temperature is designed to be transferred to the water flowing therethrough. In condenser 14 the heat of condensation of the refrigerant is rejected to a heat transfer media in heat transfer relation therewith.

When pump 30 is energized water is circulated from either water inlet 60 or hot water tank 22 through the water inlet extension 61. If the hot water system is removing water from water outlet 62 then water from water inlet 60 may flow directly to pump 30. If no outlet water is being discharged from the hot water tank then pump 30 will act to circulate water drawn from the bottom of hot water tank 22 through water inlet extension 61 and feed line 64. Pump 30 will circulate water through the water conduit portion of desuperheater 12 when the inlet thermal switch 32 and outlet thermal switch 34 are both closed energizing solenoid valve 36. Inlet thermal switch 32 is a thermal sensing device set to open if the incoming water temperature exceeds a predetermined value such as 120°F (48°C). Outlet thermal switch 34 is a thermal sensing device set to open if the temperature of the water being discharged from the heat exchanger drops below a second predetermined value such as 140°F (60°C). This combination of thermal switches acts to prevent flow through the heat exchanger if the water in the hot water tank is already sufficiently heated, i.e. the inlet water temperature is above 120°F (48°C). It also serves to prevent water flow through the heat exchanger if the water within the heat exchanger has not been sufficiently heated such that cold water would be returned to the tank. Consequently, once this temperature is over 140°F (60°C), the thermal switch closes such that that batch of water within the desuperheater may be circulated back to the hot water tank.

By-pass line 80 connected superheater inlet line 66 and return line 70 has either formed as a part thereof or by its configuration a flow restriction. This flow restriction serves to limit the volume flow of water through the by-pass line regardless of whether solenoid line 36 is in the open position or the closed position. If solenoid valve 36 is open the pump experiences little head and pumps a preselected volume of water primarily through the heat exchanger. A small percentage of this water will flow through the by-pass and flow restriction such that not all of the water flows through the heat exchanger. However, should solenoid valve 36 be closed preventing flow through the heat exchanger then the only remaining flow path is through the restriction in by-pass line 80. Since this restriction may be an orifice or other small diameter opening the pump 30 does not generate sufficient head to pump a large flow of water therethrough. Consequently, a substantially reduced volume flow from the volume that flows through the heat exchanger when the valve is opened flows through by-pass line 80 when the solenoid valve is closed. This reduced flow when the valve is closed serves to allow inlet thermal switch 32 to constantly monitor the temperature of the water in the hot water tank. Should the solenoid valve 36 be closed because the temperature of the water in the water tank is sufficiently high, then after either usage of tank hot water or heat loss from the tank additional heat energy is required. By constantly operating the pump inlet thermal switch 32 is able to sense when either of these conditions is reached. Additionally, the energy generated by the constant operation of the pump is transferred to the water flowing through the pump such that the small volume of water being circulated is somewhat heated as it is returned to the hot water tank.

The water being returned through return line 70 to the hot water tank passes through coaxial fitting 90. Coaxial fitting 90 is designed to be secured to tank outlet 59 at the top of hot water tank 22 and to water outlet conduit 62 supplying the remainder of the hot water system. Coaxial fitting 90 has opening 93 formed in the side wall thereof through which return line extension 92 projects. Return line 70 is connected to return line extension 92 by joint 91. The return line extension is bent within the coaxial fitting and extends coaxial to the conduit portion 94 of the fitting into the reservoir of water contained in the tank.

Without a return line extension or its equivalent the heated water from the heat exchanger would be conducted directly into water outlet conduit 62 and into the hot water system of the home. This water may be at a temperature hotter than anticipated and might provide an unexpected blast of overheated water. To avoid this problem of unexpected warmer water return line extension 92 is utilized such that the heated water from the heat exchanger is discharged into the tank some distance below the top of the tank. The length of the return line extension extending into the tank is sufficient such that there is some mixing of the water from the heat exchanger with the reservoir of water in the hot water tank prior to the hot water being conducted out of the tank. If the hot water from the heat exchanger were simply dumped into the top of the tank that hot water might remain there since the tank is stratified. Again, an unexpectedly warm spurt of hot water might be conducted out the hot water system upon demand therefor. The extension of the return line serves to have the water from the heat exchanger injected into the reservoir a distance from the tank outlet enabling the water from the desuperheater to be sufficiently mixed with the water in the reservoir such that the water being discharged out of the tank outlet will not have an unexpectedly high temperature.

**Claims**

1. A system for transferring heat energy from a refrigeration circuit to a hot water circuit, said system including a refrigeration circuit, a hot water circuit and a heat exchanger associated with both said circuits, wherein the refrigeration circuit includes a compressor (10), a condenser (14), a conduit (11) interconnecting the compressor and condenser and passing through the heat exchanger, an expansion device (16), and an evaporator (18) and wherein the hot water circuit includes a reservoir tank (22), a conduit (64, 15, 70) for passing water through the system to said tank, a portion (15) of said conduit passing through the heat exchanger and a further portion (80) of said conduit by-passing said heat-exchanger, a sensor (32) located in the water conduit upstream of the heat exchanger and a control valve (36) is located in the hot water conduit downstream of the heat exchanger, and a pump (30) located between the reservoir tank (22) and both the conduit passing through the heat exchanger (15) and the further portion (80), characterized in that the inlet of the by-pass conduit (80) is located downstream of the sensor (32) and upstream of the heat exchanger and the outlet of the by-pass conduit (80) is located downstream of the valve (36) and the sensor (32) is coupled to the valve (36) to permit said valve (36) to open when a temperature below a predetermined value is sensed, whereby when said valve (36) is open, primary flow of water is through the heat exchanger while secondary flow is through the by-pass conduit (80) and when said valve is closed, a substantially reduced volume of water flows per unit of time through the by-pass conduit (80) only, thereby by-passing the heat exchanger.

2. A system according to claim 1, characterized in that a restriction (38) is located in the by-pass conduit (80).

3. A system according to claim 1 or claim 2, characterized in that a second sensor (34) is disposed in the primary flow path downstream of the heat exchanger for sensing the temperature of the water being discharged from the heat exchanger, and in that a control is provided for opening the valve (36) to allow flow through the heat exchanger when the sensor (32) senses a temperature below a first predetermined value and the second sensor (34) senses a temperature above a second predetermined value.

4. A system according to claim 1, further characterized by the hot water circuit including a fitting adapted to connect a heated water outlet of the tank (22) containing a reservoir of water to a heated water system and for discharging water heated outside the tank into the tank having a conduit portion (94) connecting the heated water outlet to the heated water system, and a return line extension (92) extending through the heated water outlet of the tank into the reservoir of water in the tank, the length that the return line extension extends into the tank being sufficient such that the water heated outside the tank and flowing through the return line extension at least partially mixes with the water in the tank prior to being discharged from the tank through the heated water outlet.

5. A system according to claim 4, characterized in that the conduit portion (94) having an opening (93) therethrough and in that the return line extension (92) is secured within the opening through the conduit portion (94), said extension having one end external of the conduit portion for connection with the supply of water heated outside the tank, and having the other end extend through the heated water outlet into the reservoir of water within the tank.

**Patentansprüche**

1. System zum Übertragen von Wärme von einem Kälteerzeugungskreislauf zu einem Heißwasserkreislauf mit einem Kälteerzeugungskreislauf, einem Heißwasserkreislauf und einem beiden Kreisläufen zugeordneten Wärmeaustauscher, wobei der Kälteerzeugungskreislauf einen Kompressor (10), einen Kondensator (14), eine den Kompressor und den Kondensator miteinander verbindende und durch den Wärmeaustauscher führende Leitung (11), eine Ausdehnungseinrichtung (16) und einen Verdampfer (18) besitzt und der Heißwasserkreislauf einen Speicherbehälter (22), eine Leitung (64, 15, 70) zum Hindurchführen von Wasser durch das System und in den Behälter, wobei ein Teil (15) der genannten Leitung durch den Wärmeaustauscher geführt ist und ein anderer Teil (80) der benannten Leitung an dem den Wärmeaustauscher umgeht, ferner einen in der Wasserleitung stromaufwärts von dem Wärmeaustauscher angeordneten Sensor (32) und ein in der Heißwasserleitung stromabwärts von dem Wärmeaustauscher angeordnetes Steuerventil (36) und eine Pumpe (30) besitzt, die zwischen dem Speicherbehälter (22) und sowohl der durch den Wärmeaustauscher führenden Leitung (15) als auch dem anderen Teil (80) angeordnet ist, dadurch gekennzeichnet, daß der Eintritt der Umgehungsleitung (80) stromabwärts von dem Sensor (32) und stromaufwärts von dem Wärmeaustauscher angeordnet ist, daß der Austritt der Umgehungsleitung (80) stromabwärts von dem Ventil (36) angeordnet ist, und daß der Sensor (32) derart mit dem Ventil (36) gekoppelt ist, daß dieses öffnet, wenn die gemessene Temperatur einen vorherbestimmten Wert unterschreitet, so daß bei offenem Ventil (36) Wasser in einem Primärstrom durch den Wärmeaustauscher und in einem Sekundärstrom durch die Umgehungsleitung (80) tritt und bei geschlossenem Ventil Wasser in einem beträchtlich kleineren Volumen pro Zeiteinheit unter Umgehung des Wärmeaustauschers durch die Umgehungsleitung (80) strömt.

2. System nach Anspruch 1, dadurch gekennzeichnet, daß in der Leitung (80) eine Drosselstelle (38) vorgesehen ist.

3. System nach Anspruch 1 oder 2, dadurch gekennzeichnet, daß in dem Primärströmungsweg stromabwärts von dem Wärmeaustauscher ein zweiter Sensor (34) angeordnet ist, der zum Messen der Temperatur des aus dem Wärmeaustauscher austretenden Wassers dient, und daß ein Steuergerät vorgesehen ist, das dazu dient, das Ventil (36) zu öffnen und dadurch die Strömung von Wasser durch den Wärmeaustauscher freizugeben, wenn die von dem Sensor (32) gemessene Temperatur unter einem ersten vorherbestimmten Wert und die von dem zweiten Sensor (34) gemessene Temperatur über einem zweiten vorherbestimmten Wert liegt.

4. System nach Anspruch 1, dadurch gekennzeichnet, daß der Heißwasserkreislauf ein Anschlußstück besitzt, das geeignet ist, einen Heißwasseraustritt des einen Wasservorrat enthaltenden Behälters (22) mit einem Heißwassersystem zu verbinden und außerhalb des Behälters erhitzte Wasser in den Behälter einzuleiten und das ein Leitungsstück (94) besitzt, das den Heißwasseraustritt mit dem Heißwassersystem verbindet, und eine Rücklaufleitungsverlängerung (92), die sich durch den Heißwasseraustritt des Behälters hindurch und in einer solchen Länge in den in diesem vorhandenen Wasservorrat erstreckt, daß sich das außerhalb des Behälters erhitzte und durch die Verlängerung der Rücklaufleitung strömende Wasser mindestens teilweise mit dem in dem Behälter befindlichen Wasser vermischt, ehe es durch den Heißwasseraustritt aus dem Behälter austritt.

5. System nach Anspruch 4, dadurch gekennzeichnet, daß das Leitungsstück von einer Öffnung durchsetzt ist, in der die Verlängerung der Rücklaufleitung das Leitungsstück durchsetzt und an diesem befestigt ist, wobei das eine Ende der Verlängerung außerhalb des Leitungsteils angeordnet ist und zum Anschluß an eine Einrichtung zum Zuführen des außerhalb des Behälters erhitzten Wassers dient und das andere Ende der Verlängerung sich durch den Heißwasseraustritt in den in dem Behälter befindlichen Wasservorrat erstreckt.

**Revendications**

1. Un système pour transférer de l'énergie calorifique d'un circuit de réfrigération à un circuit d'eau chaude, ledit système comprenant un circuit de réfrigération, un circuit d'eau chaude et un échangeur de chaleur associé auxdits deux circuits, dans lequel le circuit de réfrigération comprend un compresseur (10), un condenseur (14), un conduit (11) reliant entre euxle compresseur et le condenseur et traversant l'échangeur de chaleur, un dispositif détendeur (16) et un évaporateur (18) et dans lequel le circuit d'eau chaude comprend un ballon réservoir (22), un conduit (64, 15, 70) servant à faire passer de l'eau à travers le système jusqu'audit ballon, une partie (15) dudit conduit traversant l'échangeur de chaleur et une autre partie (80) dudit conduit contournant ledit échangeur de chaleur, un détecteur (32) monté dans un conduit d'eau en amont de l'échangeur de chaleur et un robinet de commande (36) est monté dans le conduit d'eau chaude en aval de l'échangeur de chaleur et une pompe (30) montée entre le ballon réservoir (22) et à la fois le conduit (15) traversant l'échangeur de chaleur et l'autre partie, caractérisé en ce que l'orifice d'entrée du conduit de dérivation (80) est situé en aval du détecteur (32) et en amont de l'échangeur de chaleur et l'orifice de sortie du conduit de dérivation (80) est situé en aval du robinet (36) et le détecteur (32) est couplé au robinet (36) pour permettre audit robinet (36) de s'ouvrir lorsqu'une température inférieure à une valeur prédéterminée est détectée, de sorte que, lorsque le robinet (36) est ouvert, l'écoulement primaire d'eau s'effectue à travers l'échangeur de chaleur tandis que l'écoulement secondaire s'effectue par le conduit de dérivation (80) et que, lorsque ledit robinet est fermé, un volume d'eau fortement réduit s'écoule par unité de temps uniquement par le conduit de dérivation (80), contournant, de ce fait, l'échangeur de chaleur.

2. Un système selon la revendication 1, caractérisé en ce qu'un étranglement (38) est disposé dans le conduit de dérivation (80).

3. Un système selon la revendication 1 ou la revendication 2, caractérisé en ce qu'un second détecteur (34) est disposé dans le trajet d'écoulement primaire en aval de l'échangeur de chaleur pour détecter la température de l'eau qui est déchargée de l'échangeur de chaleur et en ce qu'une commande est prévue pour ouvrir le robinet (36) afin de permettre l'écoulement à travers l'échangeur de chaleur lorsque le détecteur (32) détecte une température inférieure à une première valeur prédéterminés et que le second détecteur (34) détecte une témpéature supérieure à une seconde valeur prédéterminée.

4. Un système selon la revendication 1, caractérisé, en outre, en ce que le circuit d'eau chaude comporte un raccord agencé de manière à raccorder un orifice de sortie d'eau chaude du ballon (22) contenant une réserve d'eau à un système d'eau chaude et à refouler de l'eau chauffée à l'extérieur du ballon dans le ballon, ce raccord comprenant une partie (49) de conduit qui relie l'orifice de sortie d'eau chaude au système d'eau chaude, et un prolongement (92) de la canalisation de retour qui s'étend à travers l'orifice de sortie d'eau chaude du ballon jusque dans la réserve d'eau contenue dans le ballon, la longueur dont le prolongement de la canalisation de retour pénètre dans le ballon étant suffisante pour que l'eau chauffée à l'extérieur du ballon et s'écoulant par le prolongement de la canalisation de retour se mélange au moins en partie avec l'eau contenue dans le ballon avant d'être évacuée du ballon par l'orifice de sortie d'eau chaude.

5. Un système selon la revendication 4, caractérisé en ce qu'une ouverture (93) est formée dans la partie (49) de conduit et en ce que le prolongement (92) de la canalisation de retour est fixé à l'intérieur de l'ouverture de la partie (94) de conduit, ledit prolongement ayant une extrémité située à l'extérieur de la partie de conduit de manière à pouvoir être raccordée à la source d'eau chauffée à l'extérieur du ballon, et ayant son autre extrémité qui s'étend dans l'orifice d'une sortie d'eau chaude jusque dans la réserve d'eau contenu dans le ballon.

1